# EUROPÄISCHE PATENTSCHRIFT

(11) **EP 3 292 618 B1**
(45) Veröffentlichungstag und Bekanntmachung des Hinweises auf die Patenterteilung: **14.02.2024**
(21) Anmeldenummer: 16719350.7
(22) Anmeldetag: 19.04.2016
(51) Int. Cl.: H02K 3/50, H02K 3/52

(54) **ELEKTROMOTOR MIT EINEM ISOLIERELEMENT MIT FÜHRUNGSMITTEL**
ELECTRIC MOTOR WITH AN INSULATION ELEMENT COMPRISING A GUIDE MEANS
MOTEUR ELECTRIQUE AVEC UN ELEMENT ISOLANT COMPRENANT UN MOYEN DE GUIDAGE

(30) Priorität: 05.05.2015 DE 102015208251
(43) Veröffentlichungstag der Anmeldung: 14.03.2018
(73) Patentinhaber: Robert Bosch GmbH, 70442 Stuttgart (DE)
(72) Erfinder: BITZER, Harold, 77815 Buehl (DE); GLUECK, Wolfgang, 76532 Baden-Baden (DE); HAUSER, Peter, 71701 Schwieberdingen (DE); LEHMANN, Ralf, 77704 Oberkirch (DE)
(86) Internationale Anmeldenummer: PCT/EP2016/058647
(87) Internationale Veröffentlichungsnummer: WO 2016/177569

(56) Entgegenhaltungen:
- EP-A2- 2 680 412
- DE-A1- 19 842 170
- US-A- 4 004 169
- US-A- 5 682 070
- US-A1- 2003 011 269
- US-A1- 2014 363 320

## Beschreibung

Die Erfindung betrifft einen Elektromotor mit einer Armatur und mindestens einem Isolierelement nach Gattung der unabhängigen Ansprüche.

### Stand der Technik

Es ist bereits ein Elektromotor umfassend eine Armatur, die eine Vielzahl von Zähnen und eine Vielzahl von Nuten aufweist, bekannt. Auch ist bekannt, dass die Wicklungsleiter, welche die Wicklungen bilden von der Armatur elektrisch durch ein Isoliermittel getrennt sind. Weiterhin ist aus der EP 2 680 412 A2, welche den Oberbegriff des Anspruchs 1 offenbart, bekannt, ein Führungsmittel mittels Ausnehmungen in der Armatur selbst zu erstellen, was jedoch sehr kostenintensiv und bei der Herstellung sehr aufwendig ist. Auch ist insbesondere bei der Herstellung darauf zu achten, dass das Führungsmittel in den Blechübergängen keine scharfkantigen Stellen aufweist, die eine Beschädigung der Wicklungsleiter oder der Beschichtung der Wicklungsleiter zur Folge haben könnte.

### Offenbarung der Erfindung

Der erfindungsgemäße Elektromotor mit den Merkmalen des Hauptanspruchs hat den Vorteil, dass eine verbesserte und vereinfachte Herausführung eines Wicklungsleiters aus der Armatur ermöglicht wird. Als weiteren Vorteil ist anzusehen, dass die Führungsmittel sehr einfach und kostengünstig umgesetzt werden können. Ferner können bestehende Armaturen ohne ein Neudesign der Armatur durch ein erfindungsgemäßes Isolierelement mit Führungsmittel ergänzt bzw. erweitert werden.

Durch die in den Unteransprüchen aufgeführten Maßnahmen ergeben sich vorteilhafte Weiterbildungen und Verbesserungen der im Hauptanspruch angegebenen Merkmale.

Vorteilhaft ist, dass die Wicklungsleiterabschnitte eines Wicklungsleiters in axialer Richtung aus der Armatur geleitet, bzw. geführt werden. Das Herausleiten oder das Hineinleiten der Wicklungsleiterabschnitte in axialer Richtung aus oder in die Armatur durch ein Führungsmittel ermöglicht eine erleichterte Kontaktierung, bzw. Verbindung der Wicklungsleiter mit weiteren Bauteilen, insbesondere der Elektronik außerhalb der Armatur. Die Montage kann vereinfacht und damit können die Herstellungskosten gesenkt werden.

Als Vorteil ist anzusehen, dass der Wicklungsleiterabschnitt innerhalb des Führungsmittels angeordnet ist. Die Breite des Führungsmittels ist insbesondere so gewählt, dass innerhalb eines Führungsmittels nur ein einziger Wicklungsleiterabschnitt geführt ist. Durch die Anpassung der Breite des Führungsmittels an den Durchmesser des Wicklungsleiterabschnitts ist eine Führung bzw. Leitung des Wicklungsleiterabschnitts innerhalb des Führungsmittels möglich.

Vorteilhaft ist, dass das Führungsmittel den geführten Wicklungsleiterabschnitt von der Wicklung trennt. Durch die Trennung sind eine mögliche elektrische Kontaktierung und damit ein Kurzschluss verhindert. Auch wird die Führung des Wicklungsleiters in oder aus der Armatur verbessert.

Besonders vorteilhaft ist, dass das Führungsmittel als Führungsmittelsnut ausgebildet ist. Die Führungsmittelsnut ermöglicht eine definierte Führung eines Wicklungsleiterabschnitts, bzw. eines Wicklungsleiterabschnitts eines Wicklungsleiters. Eine definierte Führung bewirkt ein definiertes herausführen des Wicklungsleiterabschnitts aus der Armatur und damit ein vereinfachtes elektrisches Verbinden eines Wicklungsleiterabschnitts mit weiteren Bauelementen wie beispielsweise dem Schaltungsträger oder den Ansteuerschaltern.

Als vorteilhaft ist anzusehen, dass das Führungsmittel als eine in axialer Richtung verlaufende Führungsmittelnut ausgebildet ist. Die Führungsmittelnut ist entlang der axialen Richtung geöffnet. Somit kann der Wicklungsleiterabschnitt bei der Montage einfach in das Führungsmittel eingelegt werden.

Vorteilhaft ist, dass in einer Nut zwei Führungsmittel ausgebildet sind. Insbesondere werden je Wicklungsleiter zwei Führungsmittel benötigt. Bei einem dreiphasigen Elektromotor und damit verbunden mindestens drei Wicklungsleitern werden sechs Führungsmittel benötigt. Besonders vorteilhaft sind die benötigten Führungsmittel innerhalb einer, bzw. weniger Nuten angeordnet. Durch eine Führung der Wicklungsleiter, bzw. der Wicklungsleiterabschnitte eines Wicklungsleiters, wird eine kompakte Bauweise des Elektromotors erreicht, was wiederrum den Bauraum, welcher von dem Elektromotor beansprucht wird, senkt. Die Öffnungen der Führungsmittel einer Nut sind vorteilhaft einander zugerichtet und parallel ausgebildet. Durch die einander zugerichteten Öffnungen wird eine erleichterte Bewicklung der Armatur erreicht. Auch können die geführten Wicklungsleiterabschnitte einfach innerhalb der Führungsmittel angeordnet werden.

Weiter ist als vorteilhaft anzusehen, dass die Führungsmittel am Nutgrund der Nuten ausgebildet sind. Es lässt sich somit eine einfachere und kostengünstigere Verdrahtung erreichen, da die Wicklungsleiterabschnitte kompakt im Bereich der Welle des Elektromotors angeordnet sind. Auch ist vorteilhaft, dass die weiteren Komponenten, wie Schaltungsträger, Transistoren, Anschlussstecker, mit denen die Wicklungsleiterabschnitte verbunden werden, im radial inneren Bereich des Elektromotors angeordnet werden können. Eine kompakte Ausgestaltung des Elektromotors wird ermöglicht.

Als weiteren Vorteil ist anzusehen, dass das Isolierelement durch zwei oder mehr Segmente gebildet wird, wobei die Segmente in oder entgegen der Längsrichtung der Armatur, bzw. der Längsrichtung des Elektromotors, an der Armatur angeordnet sind. Die Ausbildung mindestens eines Isolierelements mittels zweier Segmente ermöglicht eine einfache Herstellung des Isolierelement und eine einfache Anordnung, beispielsweise durch aufstecken des Isolierelement auf die Armatur, an der Armatur. Ferner können die Segmente identisch ausgebildet sein, was eine Kosteneinsparung durch die Verwendung von Gleichteilen bewirkt.

Vorteilhaft ist, dass das Isolierelement durch Anspritzen eines Isolierwerkstoffs gebildet wird. Das Isolierelement wird hierbei durch das Anspritzen des Isolierwerkstoffs an die Armatur gebildet.

Besonders vorteilhaft ist, dass das Isolierelement vollständig oder teilweise aus einem Kunststoff oder einem keramischen Werkstoff ausgebildet ist. Kunststoffe oder keramische Werkstoffe ermöglichen bei geringen dicken dennoch eine geeignete Stabilität und elektrische Isolierung. Ferner ist vorteilhaft, dass die Armatur durch ein Blechpaket, welches eine Vielzahl von Blechlagen umfasst, besteht. Die einzelnen Zähne und Nuten werden insbesondere durch das Blechpaket, bzw. die Blechlagen gebildet.

Als weiteren Vorteil ist anzusehen, dass die Armatur in einem Stator oder in einem Rotor eines Elektromotors verwendet werden kann.

Vorteilhaft ist, dass ein Träger mit Ausnehmungen vorgesehen ist, wobei die aus der Armatur herausgeführten oder hineingeführten Wicklungsleiterabschnitte der Wicklungsleiter innerhalb einer Ausnehmung des Trägers verlaufen. Die Anzahl der Ausnehmungen entspricht der Anzahl der in die Armatur hineingeführten und/oder der aus der Armatur herausgeführten Wicklungsleiterabschnitte. Vorteilhaft ist ein Wicklungsleiterabschnitt eines Wicklungsleiters innerhalb einer Ausnehmung des Trägers angeordnet. Durch den Träger wird eine verbesserte Führung sowie Herausführung und/oder Hineinführung der Wicklungsleiterabschnitte aus der Armatur ermöglicht.

Besonders vorteilhaft ist, dass ein Klemmelement vorgesehen ist. Das Klemmelement weist mindestens einen Klemmfuß auf, der einen Wicklungsleiterabschnitt eines Wicklungsleiters innerhalb der Führungsmittel fixiert. Die Fixierung erfolgt insbesondere tangential und/oder axial. Der Klemmfuß ist bei einem montierten Elektromotor zwischen den Führungsmitteln innerhalb einer Nut angeordnet.

Vorteilhaft ist, dass das Klemmelement mit dem Träger zusammenwirkt, insbesondere das Klemmelement mittels der Klemmfüße mit dem Träger verbunden ist. Ferner ist vorteilhaft, dass das Klemmelement an dem Isolierelement mittels Arretierungsmittel an dem Klemmfuß fixiert ist.

Ausführungsbeispiele sind in den Figuren dargestellt und in der nachfolgenden Beschreibung näher erläutert. Es zeigen:
Figur 1 eine im Stand der Technik bekannte Armatur mit Führungsmittel,
Figur 2 einem Stand der Technik bekannte Armatur ohne Führungsmittel,
Figur 3 einen Ausschnitt eines ersten Ausführungsbeispiels einer erfindungsgemäßen Armatur,
Figur 4 eine Armatur mit einer beispielhaften Verschaltung,
Figur 5 und 6 ein zweites Ausführungsbeispiel und
Figur 7 ein weiteres Ausführungsbeispiel.

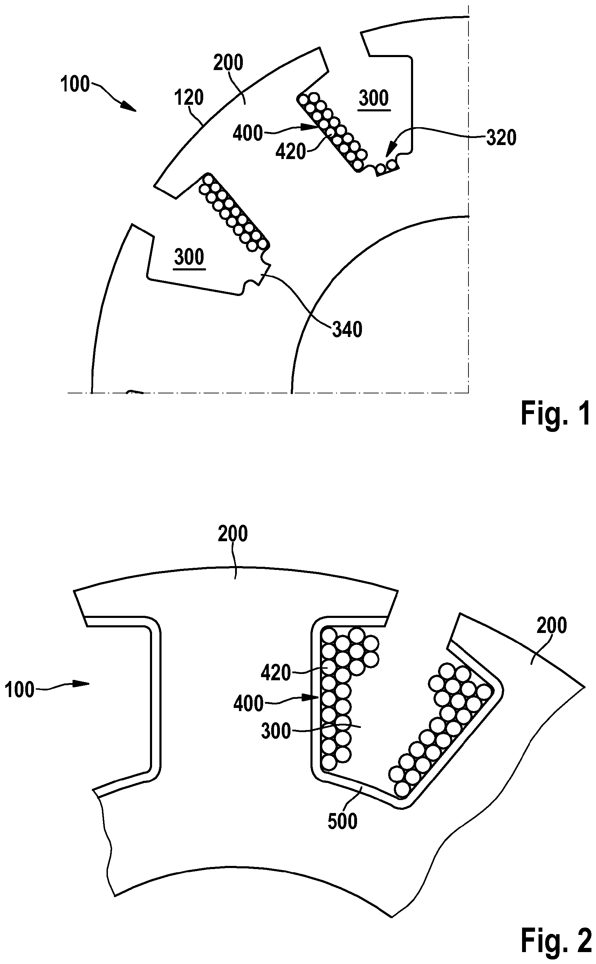

In Figur 1 ist eine aus dem Dokument EP 2 680 412 A2 bekannte Armatur eines Elektromotors gezeigt. Die Armatur 100 weist ein Blechpaket 120 auf, welches aus mehreren Blechlagen 140 besteht. Die Armatur 100 umfasst Zähne 200, die von Wicklungsdrähten 420 umwickelt sind. Die Wicklungsdrähte 420 bilden Wicklungen 400, welche zum Betrieb des Elektromotors benötigt werden. Zwischen den Zähnen 200 sind Nuten 300 ausgebildet. Die Nuten 300 trennen die Zähne 200 voneinander. Die Wicklungsdrähte 420, welche die Wicklungen 400 bilden, verlaufen teilweise innerhalb der Nuten 300. Am Nutgrund 320 der Nuten 300 ist ein Kanal 340 in der Armatur 100 ausgebildet. Die Kanal 340 wird durch die Armatur 100 selbst gebildet.

In Figur 2 ist eine weitere Armatur 100 aus dem Stand der Technik offenbart. Die Armatur 100 weist Zähne 200 auf, die durch Nuten 300 getrennt sind. Innerhalb der Nuten 300 verlaufen die Wicklungsdrähte 420. Die Wicklungsdrähte 420 sind um den Zahn 200 gewickelt und bilden die Wicklung 400. Zwischen dem Zahn 200 und den Wicklungsdrähten 420 ist ein Isolierelement 500 ausgebildet. Das Isolierelement 500 verhindert eine elektrische Verbindung zwischen den Wicklungsdrähten 420 und der Armatur 100. Eine Ausbildung gemäß Figur 2 ermöglicht keine exakte Führung eines Wicklungsdrahtendes 440 des Wicklungsdrahtes 420.

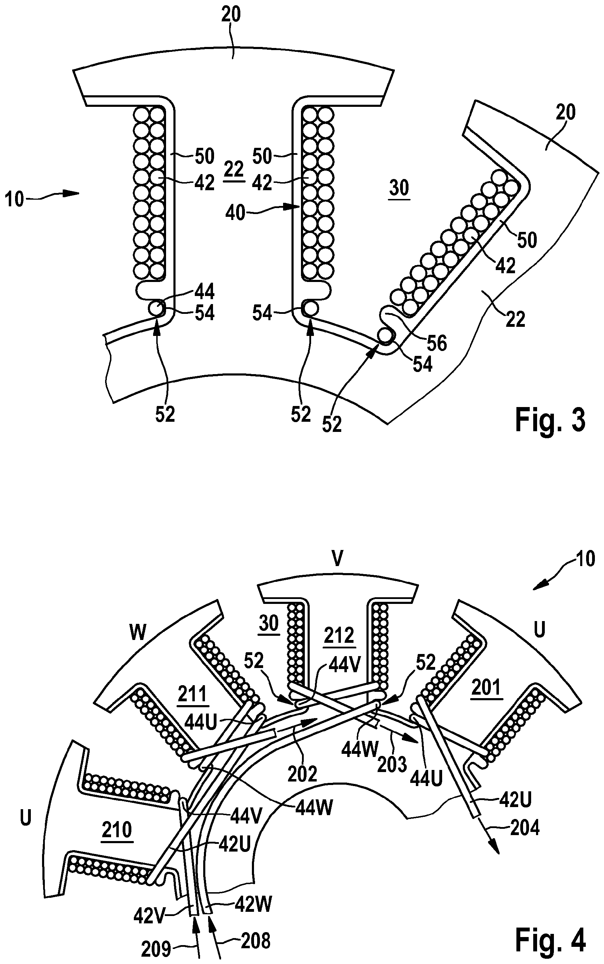

Figur 3 zeigt einen Ausschnitt eines ersten Ausführungsbeispiels einer erfindungsgemäßen Armatur 10 für einen Elektromotor 1. Die Armatur 10 weist eine Vielzahl von Zähnen 20 auf. Die Zähne 20 sind in Umfangsrichtung mittels Nuten 30 voneinander getrennt. Die Armatur 10 und die Zähne 20 werden insbesondere durch ein Blechpaket 12 gebildet. Das Blechpaket 12 besteht aus einer Vielzahl von einzelnen Blechlagen 14, die aneinander angeordnet, insbesondere geschichtet angeordnet sind. Die einzelnen Blechlagen 14 können insbesondere durch Isolationsschichten voneinander getrennt sein. Innerhalb der Nuten 30 sind ein oder mehrere Wicklungsleiter 42 angeordnet. Die Wicklungsleiter 42 sind mindestens um einen Zahn 20 gewickelt und bilden an diesem Zahn 20 eine Wicklung 40. Abhängig von der Art und der Ansteuerung des Elektromotors 1 sind eine oder mehr Wicklungen 40 je Zahn 20 ausgebildet. Auch kann ein Wicklungsleiter 42 um mehr als ein Zahn 20 gewickelt sein und somit mehr als eine Wicklung 40 bilden.

Der Wicklungsleiter 42, bzw. die Wicklungsleiter 42 sind durch ein Isolierelement 50 von der Armatur 10 getrennt. Das Isolierelement 50 trennt den Wicklungsleiter 42, bzw. die Wicklung 40 und den Zahn 20, insbesondere im Bereich der Nut 30. Das Isolierelement 50 verhindert einen direkten elektrischen Kontakt zwischen den Wicklungsleitern 42 und der Armatur 10. Auch verhindert das Isolierelement 50 die Ausbildung von Beschädigungen bei der Wicklung der Wicklungen 40. Insbesondere verhindert das Isolierelement 50 die Beschädigung an der Beschichtung des Wicklungsleiters 42 im Bereich der Kanten der obersten Blechlage 14 des Blechpakets 12, insbesondere bei der Herstellung. Der Isolierelement 50 ist in Figur 3 beispielshaft innerhalb der Nuten 30 angeordnet. Es bedeckt die Fläche der Zähne 20, die einer Nut 30 zugerichtet sind. Gemäß einer Weiterbildung der Erfindung kann das Isolierelement 50 auch weitere Teile des Zahns 20 umfassen, insbesondere die Flächen 22 des Zahns 20, die senkrecht oder im Wesentlichen senkrecht zur axialen Richtung der Armatur 10 verläuft.

Erfindungsgemäß ist zumindest ein Isolierelement 50 an der Armatur 10 ausgebildet, insbesondere angeordnet. Das Isolierelement 50 weist mindestens in einer Nut 30 ein Führungsmittel 52 auf. Das Führungsmittel 52 dient zur Führung eines Wicklungsleiterabschnitts 44 eines Wicklungsleiters 42. Die Führung, bzw. die Leitung des Wicklungsleiterabschnitts 44 erfolgt durch die Anordnung des Wicklungsleiterabschnitts 44 eines Wicklungsleiters 42 innerhalb des Führungsmittels 52. Der Wicklungsleiter 42 wird durch das Führungsmittel 52 aus der Armatur, insbesondere in axialer Richtung der Armatur 10, herausgeleitet oder in die Armatur 10 hineingeleitet, bzw. geführt. Die Führung eines Wicklungsleiterabschnitts 44 durch das Führungsmittel 52 bewirkt ein definiertes Herausleiten, bzw. Hineinleiten der Wicklungsleiter 42 in und/oder aus der Armatur 10. Insbesondere ist eine Anordnung, bzw. Ausrichtung, bzw. Ausbildung des weiteren Verlaufs der Wicklungsleiter 42 außerhalb der Armatur 10, vorzugsweise parallel zur axialen Richtung der Armatur 10, durch das Führungsmittel 52 möglich. Der Wicklungsleiterabschnitt 44 kann insbesondere im Bereich des Wicklungsleiterendes oder des Wicklungsleiteranfangs eines Wicklungsleiters 42 ausgebildet sein. Beispielsweise könnte der Wicklungsleiterabschnitt 44 insbesondere das Wicklungsleiterende oder den Wicklungsleiteranfang bilden oder benachbart zu diesen ausgebildet sein.

Gemäß Figur 3 sind innerhalb einer Nut 30 zwei Führungsmittel 52 ausgebildet. Die Führungsmittel 52 umfassen eine Führungsmittelnut 54 mit einem Trennmittel 56. Das Führungsmittel 52 trennt den Wicklungsleiterabschnitt 44 mithilfe des Trennmittels 56 von dem Teil des Wicklungsleiters 42, der um den Zahn 20 gewickelt eine Wicklung 40 bildet. Das Führungsmittel 52, insbesondere das Trennmittel 56, trennt den Wicklungsleiterabschnitt 44 von dem weiteren Teil des Wicklungsleiters 42. Auch trennt das Trennmittel den Wicklungsleiterabschnitt 44 innerhalb des Führungsmittels 52 von weiteren Wicklungsleitern 42
Die Länge, insbesondere die Länge in Umfangsrichtung der Armatur, des Trennmittels 56 entspricht der Dicke der Wicklungen 40 innerhalb einer Nut 30. Vorteilhaft sind innerhalb einer Nut 30 zwei Führungsmittel 52 angeordnet. Die Öffnungen der Führungsmittelnuten 54, bzw. die Öffnungen der Führungsmittel 52 sind, insbesondere im Wesentlichen, einander zugewandt. Die Führungsmittel 52 bzw. die Führungsmittelnuten 54 verlaufen insbesondere in Längsrichtung der Armatur 10 bzw. parallel oder antiparallel zur Welle, bzw. Achse des Elektromotors 1, bzw. in axialer Richtung der Armatur 10.

In Figur 4 ist ein Ausschnitt mit vier Zähnen 201, 210, 211, 212 einer Armatur 10 eines erfindungsgemäßen Elektromotors 1 gezeigt. Die Armatur 10 weist beispielsweise insgesamt 12 Zähne 20, bzw. 201 bis 212 auf. Insbesondere sind die Zähne 201, 210, 211, und 212 gezeigt. Die weiteren Zähne 202-209 sind entsprechend ausgebildet.

Bei dem Elektromotor 1 handelt es sich um einen Elektromotor 1 mit drei Phasen U, V, W. Der Elektromotor 1 umfasst mindestens drei Wicklungsleiter 42, die um die Zähne gewickelt sind und jeweils mindestens eine Wicklung 40 bilden. Die Wicklungen 40 eines Wicklungsleiters 42 bilden entsprechend eine Phase U, V, W des Elektromotors 1. Der Wicklungsleiter 42U ist um die Zähne 201, 204, 207, und 210 gewickelt und bildet somit vier Wicklungen. Der Wicklungsleiter 42W ist um die Zähne 202, 205, 208, und 211 gewickelt und bildet somit vier Wicklungen. Der Wicklungsleiter 42V ist um die Zähne 203, 206, 209, und 212 gewickelt und bildet somit vier Wicklungen.

Jeder Wicklungsleiter 42 weist vorzugsweise zwei Wicklungsleiterabschnitte 44 auf, die durch ein Führungsmittel 52 geführt sind. Beispielsweise weist der Wicklungsleiter 42U der Phase U die Wicklungsleiterabschnitte 44U, der Wicklungsleiter 42V der Phase V die Wicklungsleiterabschnitte 44V und der Wicklungsleiter 42W der Phase W die Wicklungsleiterabschnitt 44W auf. Die Wicklungsleiterabschnitte 44 sind innerhalb eines Führungsmittels 52 angeordnet. Insbesondere ist um den Zahn 210 der Wicklungsleiter 42U der Phase U gewickelt. Um den Zahn 211 ist der Wicklungsleiter 42W gewickelt. Der Wicklungsleiter 42W wird zusätzlich um den Zahn 202, 205 und 208 gewickelt. Der Wicklungsleiter 42W bildet somit die Wicklungen 40 der Zähne 211, 202, 205 und 208. Der erste Wicklungsleiterabschnitt 44W des Wicklungsleiters 42W ist durch ein Führungsmittel 52 geführt, welches zwischen den Zähnen 210 und 211 ausgebildet ist. Der zweite Wicklungsleiterabschnitt 44W des Wicklungsleiters 42W ist in einem weiteren Führungsmittel 52 geleitet, welches zwischen den Zähnen 212 und 201 ausgebildet ist.

Die Wicklungsleiterabschnitte 44V des Wicklungsleiters 42V sind jeweils innerhalb eines Führungsmittels 52 zwischen den Zähnen 210 und 211 sowie 211 und 212 geführt. Die Wicklungsleiterabschnitte 44U sind jeweils innerhalb eines Führungsmittels 52 zwischen den Zähnen 211 und 212 sowie 212 und 201 geführt.

Die Wicklungsleiterabschnitt 44 der Wicklungsleiter 42 verlaufen innerhalb der Führungsmittel 52 parallel oder antiparallel zur Längsachse, bzw. Achse des Elektromotors 1.

Gemäß einer Weiterbildung der Erfindung weist der Elektromotor eine Vielzahl von Wicklungsleitern 42 mit jeweils zwei Wicklungsleiterabschnitten 44 auf. Insbesondere wird die Wicklung jedes Zahns 20 durch einen Wicklungsleiter 42 gebildet. Die Wicklungsleiterabschnitte 44 des Wicklungsleiters 42, der eine Wicklung an einem ersten Zahn bildet, sind in den an den ersten Zahn angrenzenden Führungsmittel 52 geführt. Insbesondere erfolgt die Verschaltung der einzelnen Wicklungsleiter 42, bzw. der Wicklungen 40 außerhalb der Armatur 10. Vorzugsweise besteht eine Motorphase U, V, W aus mehreren Wicklungen 40, bzw. Wicklungsleitern 42, die elektrisch miteinander verbunden sind. Es sind je Zahn 20 zwei Führungsmittel 52 ausgebildet.

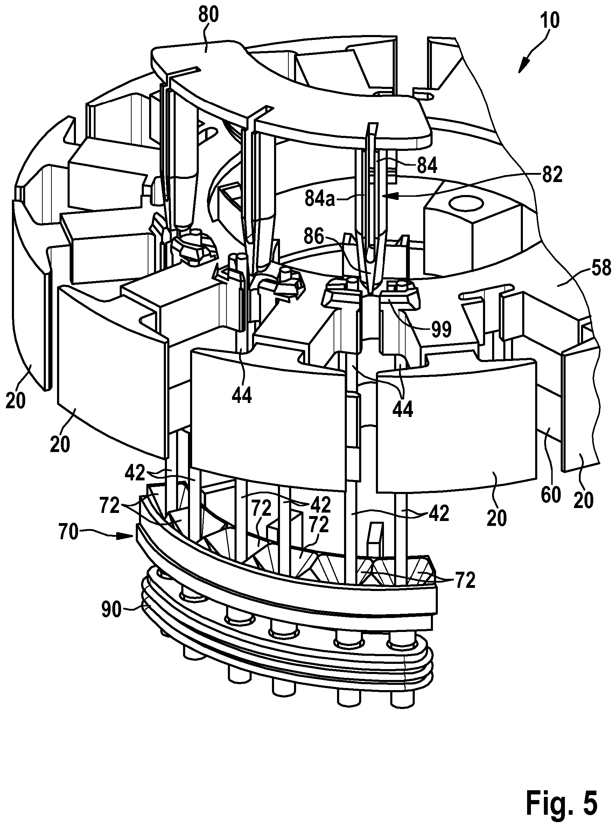

In Figur 5 ist ein weiteres Ausführungsbeispiel einer Armatur 10 eines erfindungsgemäßen Elektromotors 1 offenbart. An der Armatur 10 ist ein Isolierelement 50 angeordnet. Das Isolierelement 50 wird durch zwei Segmente 58, 60 gebildet. Das erste Segment 58 des Isolierelement 50 ist an einer der Längsseiten der Armatur 10 und teilweise zwischen den Nuten 30 an der Armatur 10 angeordnet. Das zweite Segment 60 ist entsprechend auf der gegenüberliegenden Längsseite der Armatur 10 und ebenfalls teilweise zwischen den Nuten 30 an der Armatur 10 angeordnet. Das erste Segment 58 und das zweite Segment 60 sind vollständig umlaufend ausgebildet. Die Segmente 58, 60 sind somit an allen Zähnen 20, bzw. 201-212 angeordnet. Durch die zweiteilige Ausbildung des Isolierelements 50 in ein erstes Segment 58 und ein zweites Segment 60 wird eine einfache Montage des Isolierelements 50 an der Armatur 10 ermöglicht. Das Anordnen der beiden Segmente 58, 60 an der Armatur 10 mittels Zusammenstecken kann bei der Montage sehr einfach umgesetzt werden.

Gemäß einer Weiterbildung der Erfindung sind die beiden Segmente 58, 60 als Gleichteile ausgebildet, wodurch die Herstellungskosten der Segmente 58, 60 minimiert sind. Die Segmente 58, 60 können bei der Anordnung an der Armatur 10 in Längsrichtung, axialer Richtung der Armatur 10 beabstandet zueinander sein.

Ein Fixierungselement 99 kann zusätzlich an den Führungsmitteln 52 angeordnet sein. Das Fixierungselement 99 ermöglicht eine noch präzisere Führung der Wicklungsleiterabschnitte 44. Insbesondere kann das Fixierungselement 99 auch Teil des Führungsmittels 52 sein.

Ferner ist ein Träger 70 vorgesehen, der Ausnehmungen 72 zur Führung und Fixierung der aus der Armatur 10 geführte Wicklungsleiterabschnitte 44 aufweist. Die Führung der Wicklungsleiterabschnitte 44 in den Führungsmitteln 52 bewirkt ein herausführen der Wicklungsleiter 42 in Längsrichtung der Armatur 10. Die weggeführten Wicklungsleiterabschnitte 44 werden bei der Montage in die Ausnehmungen 72 des Trägers 70 eingeführt. Die Ausnehmungen 72 sind kegelförmig ausgebildet, wodurch eine vereinfachte Einführung, der herausgeführten oder hineingeführten Wicklungsleiter 42, in die Ausnehmungen 72 erreicht wird.

Ein Klemmelement 80 dient zur Fixierung bzw. Arretierung eines Wicklungsleiterabschnitts 44 innerhalb eines Führungsmittel 52. Das Klemmelement 80 weist hierzu mindestens einen Klemmfuß 82 auf. Die Klemmfüße 82 sind bei der Anbringung des Klemmelements 80 zwischen den Wicklungsleiterabschnitten 44 innerhalb einer Nut 30 angeordnet. Die Klemmfüße 82 sind elastisch ausgebildet, wodurch eine flexible Arretierung eines Wicklungsleiterabschnitts 44 innerhalb eines Führungsmittels 52 erreicht wird. Die Klemmfüße 82 können insbesondere über die Öffnungen der Führungsmittel 52 mit den in den Führungsmitteln 52 geführten Wicklungsleitern 42 zusammenwirken. Ein Klemmfuß 82 fixiert den Wicklungsleiterabschnitt 44 insbesondere tangential und/oder axial innerhalb von dem Führungsmittel 52. Beispielhaft weisen die Klemmfüße gemäß Figur 5 zwei Klemmfußschenkel 84a und 84b auf. Die beiden Klemmfußschenkel 84a, 84b sind parallel angeordnet. Zwischen den beiden Klemmfußschenkeln 84a, 84b ist ein Luftraum ausgebildet, wodurch eine elastische Verformung der Klemmfußschenkel 84a, 84b aufeinander zu ermöglicht ist. Diese Verformung erfolgt insbesondere bei der Anordnung der Klemmfußschenkel 84a, 84b innerhalb der Nuten 30. Die beiden Klemmfußschenkel 84a, 84b sind durch eine Klemmfußspitze 86 miteinander verbunden. Die Klemmfußspitze 86 ermöglicht die verbesserte Führung des Klemmfußes 82 bei der Montage. Ferner kann die Klemmfußspitze 86 Mittel aufweisen, die eine Arretierung des Klemmfußes 82 an dem Träger 70 bzw. den Ausnehmungen des Trägers 70 ermöglichen. Auch kann der Klemmfuß 82 Mittel aufweisen, die eine Arretierung des Klemmfußes 82 an einem Isolierelement 50 ermöglichen. Diese Mittel können beispielsweise an der Klemmfußspitze 86 ausgebildet sein. Der Klemmfußschenkel 84a, 84b wirkt tangential auf den Wicklungsleiterabschnitt 44 in dem Führungsmittel 52.

Das Klemmelement 80 und der Träger 70 wirken insbesondere durch die Klemmfüße 82 zusammen. Die Klemmfüße 82 können beispielsweise an dem Träger 70 befestigt sein. Hierdurch wird eine Verklemmung der gesamten Armatur 10 erreicht.

Die Führungsmittel 52 ermöglicht eine definierte Ausrichtung eines Wicklungsleiterabschnitts 44 und damit eine definierte Ausrichtung der Wicklungsleiter 42 außerhalb der Armatur 10, wodurch bei der Montage eine Vereinfachung der Kontaktierung mit einer Leiterplatte ermöglicht wird. Insbesondere ist es möglich die aus der Armatur 10 herausgeführten Wicklungsleiter 42 auf eine gleiche Länge zu kürzen und diese in Berührung mit den Kontaktstellen der Leiterplatte zu bringen. Anschließend kann eine elektrische Kontaktierung einfach durch verlöten erreicht werden.

Das Isolierelement 50 ist aus einem Werkstoff gebildet, der elektrisch isolierend ist. Das Isolierelement 50 wird teilweise oder vollständig beispielsweise aus Keramik oder einem Kunststoff gebildet.

Ferner kann ein Dichtmittel 90 mit Ausnehmungen 92, die entsprechenden den Ausnehmungen 72 des Trägers 70 ausgebildet sind, in Richtung der Wicklungsleiterabschnitts 44 nachfolgend an den Träger 70 angeordnet, werden.

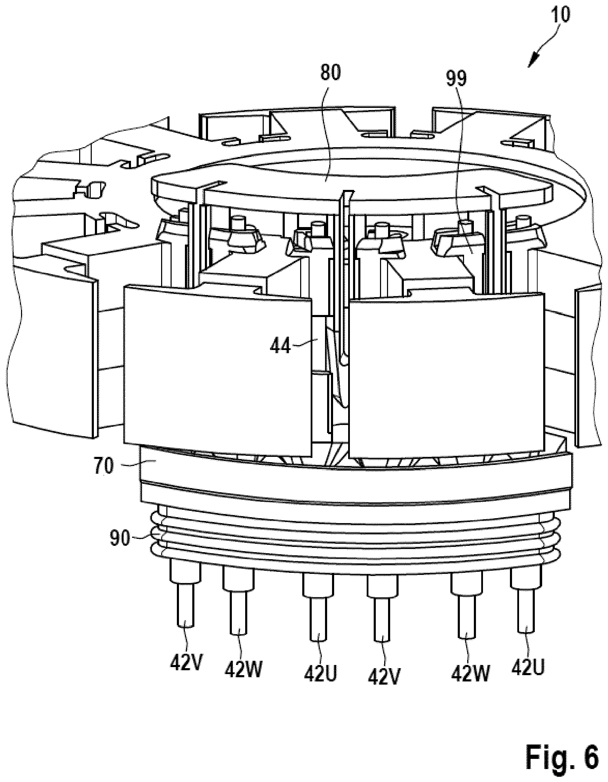

Figur 6 zeigt die Armatur 10 gemäß Figur 5, wobei der Träger 70 das Klemmelement 80 und das Dichtmittel 90 an der Armatur 10 angeordnet sind. Die Wicklung und Verschaltung der Wicklungsleiter 42 erfolgt beispielsweise gemäß Figur 4.

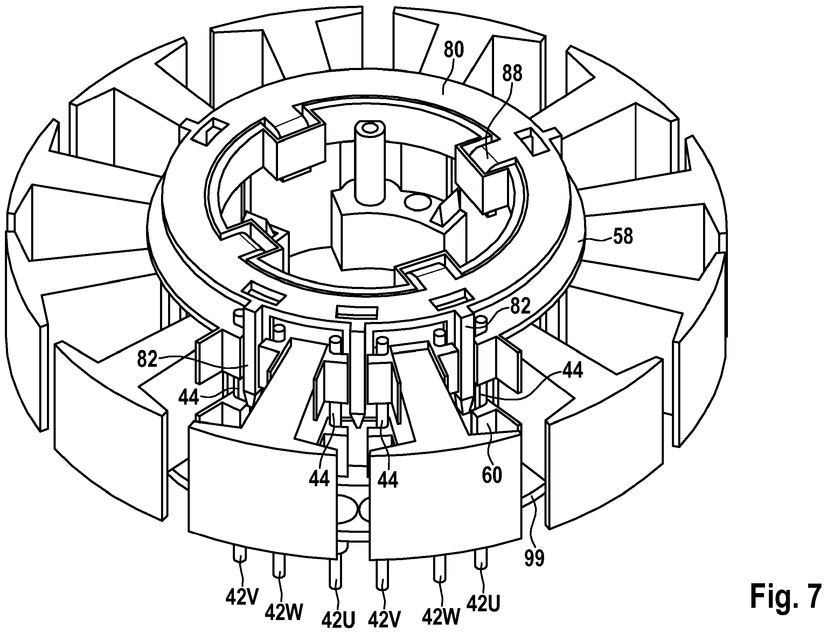

In Figur 7 ist ein weiteres Ausführungsbeispiel dargestellt. Das Isolierelement 50 ist durch zwei Segmente 58, 60, wie bei dem Ausführungsbeispiel in der Figur 5 und 6, gebildet. An dem ersten Segment 58 ist ein Klemmelement 80 angeordnet. Das Klemmelemente 80 und das Isolierelement 50, insbesondere das Segment 58, sind, insbesondere durch Befestigungsmittel 88, vorzugsweise Rastelemente, miteinander verbunden. Die Befestigungsmittel 88 greifen in die Befestigungsmittel des Isolierelements 50 ein. Die Klemmelemente 80 fixieren jeweils einen Wicklungsleiterabschnitt 44 innerhalb eines Führungsmittels 52. Das Klemmelement 80 drückt ein Wicklungsabschnitt 44 in ein Führungsmittel 52. Das Klemmelement 80 verhindert ein axiales Verschieben eines Wicklungsabschnitts 44, insbesondere beim Aufschieben des Dichtmittels 99.

Das Klemmelement 80 weist zumindest einen Klemmfuß 82 auf. Der Klemmfuß 82 ist senkrecht zu der Oberfläche des Klemmelements 90 an dem Klemmelement 80 ausgebildet. Der Klemmfuß 82 verläuft parallel zur Achse des Elektromotors 1. Der Klemmfuß 82 weist eine Klemmfußspitze 86 auf. Die Klemmfußspitze 86 ermöglicht die verbesserte Führung des Klemmfußes 82 bei der Montage. Ferner kann die Klemmfußspitze 86 Mittel aufweisen, die eine Arretierung des Klemmfußes 82 an dem Träger 70 bzw. den Ausnehmungen des Trägers 70 ermöglichen. Auch kann der Klemmfuß 82 Mittel aufweisen, die eine Arretierung des Klemmfußes 82 an einem Isolierelement 50 ermöglichen. Der Klemmfuß 82 ist zwischen den Führungsmitteln 52 angeordnet ist.

Gemäß einem weiteren Ausführungsbeispiel wird das Isolierelement 50 mittels Anspritzen eines Isolierwerkstoffs an die Armatur 10 gebildet. Mit dem Anspritzen werden auch die Führungsmittel 52 erstellt.

Gemäß einer Weiterbildung der Erfindung ist das Führungsmittel 52 als Drahtlegenut ausgebildet.

Die Armatur 10 ist gemäß den Figuren 3-7 als ein Element des Stators ausgebildet. Sie kann jedoch auch als Element eines Rotors ausgebildet sein.

## Patentansprüche

1. Elektromotor (1) umfassend:
- eine Armatur (10), die eine Vielzahl von Zähnen (20) und zwischen den Zähnen (20) ausgebildete Nuten (30) aufweist,
- zumindest eine Wicklung (40), die durch einen Wicklungsleiter (42) gebildet ist, wobei der Wicklungsleiter (42) zwei Wicklungsleiterabschnitte (44) aufweist, wobei zumindest ein Teil der Wicklung (40) innerhalb einer der Nuten (30) verläuft,
- ein Isolierelement (50), welches die Wicklung (40) und die Armatur (10) elektrisch trennt,
wobei das Isolierelement (50) ein Führungsmittel (52) aufweist, das innerhalb einer der Nuten (30) ausgebildet ist, und wobei das Führungsmittel (52) einen Wicklungsleiterabschnitt (44) des Wicklungsleiters (42) führt und wobei der Wicklungsleiterabschnitt (44) durch das Führungsmittel (52) aus der Armatur (10) geleitet wird, **dadurch gekennzeichnet, dass** ein Klemmelement (80) vorgesehen ist, wobei das Klemmelement (80) mindestens einen Klemmfuß (82) aufweist, der den Wicklungsleiterabschnitt (44) innerhalb von dem Führungsmittel (52) fixiert.

2. Elektromotor (1) gemäß dem vorhergehenden Anspruch, **dadurch gekennzeichnet, dass** der Wicklungsleiterabschnitt (44) in axialer Richtung aus der Armatur (10) geleitet wird.

3. Elektromotor (1) gemäß dem vorhergehenden Anspruch, **dadurch gekennzeichnet, dass** der Wicklungsleiterabschnitt (44) innerhalb des Führungsmittels (52) angeordnet ist, wobei insbesondere die Breite des Führungsmittels (52) so gewählt ist, dass innerhalb des Führungsmittels (52) nur ein einziger Wicklungsleiterabschnitt (44) geführt ist.

4. Elektromotor (1) gemäß einem der vorhergehenden Ansprüche, **dadurch gekennzeichnet, dass** das Führungsmittel (52) den geführten Wicklungsleiterabschnitt (44) von der Wicklung (40) trennt.

5. Elektromotor (1) gemäß einem der vorhergehenden Ansprüche, **dadurch gekennzeichnet, dass** das Führungsmittel (52) als eine in axialer Richtung verlaufende Führungsmittelnut (54) ausgebildet ist, wobei die Führungsmittelnut (54) entlang der axialen Richtung geöffnet ist.

6. Elektromotor (1) gemäß einem der vorhergehenden Ansprüche, **dadurch gekennzeichnet, dass** in einer Nut (30) zwei Führungsmittel (52) ausgebildet sind, wobei die Führungsmittel (52) innerhalb einer Nut (30) aufeinander zugerichtet sind.

7. Elektromotor (1) gemäß einem der vorhergehenden Ansprüche, **dadurch gekennzeichnet, dass** das Führungsmittel (52) am Nutgrund (32) einer Nut (30) ausgebildet ist.

8. Elektromotor (1) gemäß einem der vorhergehenden Ansprüche, **dadurch gekennzeichnet, dass** das Isolierelement (50) durch mindestens zwei Segmente (58, 60) gebildet wird, wobei die Segmente (58, 60) in und entgegen der axialen Richtung der Armatur (10) an der Armatur (10) angeordnet sind.

9. Elektromotor (1) gemäß einem der vorhergehenden Ansprüche, **dadurch gekennzeichnet, dass** das Isolierelement (50) mittels Anspritzen eines Isolierwerkstoffes an die Armatur (10) gebildet ist.

10. Elektromotor (1) gemäß einem der vorhergehenden Ansprüche, **dadurch gekennzeichnet, dass** die Armatur (10) Teil eines Stators und/oder Teil eines Rotors des Elektromotors (1) ist.

11. Elektromotor (1) gemäß einem der vorhergehenden Ansprüche, **dadurch gekennzeichnet, dass** ein Träger (70) mit Ausnehmungen (72) vorgesehen ist, wobei die aus der Armatur (10) herausgeführten oder hineingeführten Wicklungsleiterabschnitte (44) der Wicklungsleiter (42) jeweils innerhalb einer Ausnehmung (72) des Trägers (70) verlaufen.

12. Elektromotor (1) gemäß einem der vorhergehenden Ansprüche, **dadurch gekennzeichnet, dass** der mindestens eine Klemmfuß (82) den Wicklungsleiterabschnitt (44) innerhalb von dem Führungsmittel (52) tangential und/oder axial fixiert.

13. Elektromotor (1) gemäß einem der vorhergehenden Ansprüche, **dadurch gekennzeichnet, dass** der Klemmfuß (82) zwischen den Führungsmitteln (52) innerhalb einer Nut (30) angeordnet ist.

14. Elektromotor (1) gemäß einem der Ansprüche 1, 12 und 13, **dadurch gekennzeichnet, dass** das Klemmelement (80) mit dem Träger (70) zusammenwirkt, insbesondere das Klemmelement (80) mittels dem mindestens einen Klemmfuß (82) mit dem Träger (70) verbunden ist.

15. Elektromotor (1) gemäß einem der Ansprüche 1, 12 bis 14, **dadurch gekennzeichnet, dass** das Klemmelement (80) an dem Isolierelement (50) mittels Arretierungsmittel an dem mindestens einen Klemmfuß (82) fixiert ist.

## Claims

1. Electric motor (1) comprising
- an armature (10) having a multiplicity of teeth (20) and slots (30) formed between the teeth (20),
- at least one winding (40) formed by a winding conductor (42), wherein the winding conductor (42) has two winding conductor sections (44), wherein at least one part of the winding (40) runs within one of the slots (30),
- an insulating element (50), which electrically isolates the winding (40) and the armature (10),
wherein the insulating element (50) has a guide means (52) formed within one of the slots (30), and wherein the guide means (52) guides a winding conductor section (44) of the winding conductor (42), and wherein the winding conductor section (44) is led from the armature (10) by the guide means (52), **characterized in that** a clamping element (80) is provided, wherein the clamping element (80) has at least one clamping foot (82) which fixes the winding conductor section (44) within the guide means (52).

2. Electric motor (1) according to the preceding claim, **characterized in that** the winding conductor section (44) is led from the armature (10) in an axial direction.

3. Electric motor (1) according to the preceding claim, **characterized in that** the winding conductor section (44) is arranged within the guide means (52), wherein in particular the width of the guide means (52) is chosen such that only a single winding conductor section (44) is guided within the guide means (52).

4. Electric motor (1) according to one of the preceding claims, **characterized in that** the guide means (52) separates the guided winding conductor section (44) from the winding (40).

5. Electric motor (1) according to one of the preceding claims, **characterized in that** the guide means (52) is formed as a guide means slot (54) running in an axial direction, wherein the guide means slot (54) is open along the axial direction.

6. Electric motor (1) according to one of the preceding claims, **characterized in that** two guide means (52) are formed in a slot (30), wherein the guide means (52) are directed toward one another within a slot (30) .

7. Electric motor (1) according to one of the preceding claims, **characterized in that** the guide means (52) is formed at the slot base (32) of a slot (30).

8. Electric motor (1) according to one of the preceding claims, **characterized in that** the insulating element (50) is formed by at least two segments (58, 60), wherein the segments (58, 60) are arranged on the armature (10) in and counter to the axial direction of the armature (10).

9. Electric motor (1) according to one of the preceding claims, **characterized in that** the insulating element (50) is formed by means of injection moulding an insulating material onto the armature (10).

10. Electric motor (1) according to one of the preceding claims, **characterized in that** the armature (10) is part of a stator and/or part of a rotor of the electric motor (1).

11. Electric motor (1) according to one of the preceding claims, **characterized in that** a carrier (70) having cutouts (72) is provided, wherein the winding conductor sections (44) of the winding conductors (42) that are guided out from or guided into the armature (10) each run within a cutout (72) of the carrier (70).

12. Electric motor (1) according to one of the preceding claims, **characterized in that** the at least one clamping foot (82) fixes the winding conductor section (44) tangentially and/or axially within the guide means (52).

13. Electric motor (1) according to one of the preceding claims, **characterized in that** the clamping foot (82) is arranged between the guide means (52) within a slot (30).

14. Electric motor (1) according to one of Claims 1, 12 and 13, **characterized in that** the clamping element (80) interacts with the carrier (70), in particular the clamping element (80) is connected to the carrier (70) by means of the at least one clamping foot (82) .

15. Electric motor (1) according to one of Claims 1 and 12 to 14, **characterized in that** the clamping element (80) is fixed on the insulating element (50) by means of locking means on the at least one clamping foot (82) .

## Revendications

1. Moteur électrique (1) comprenant :
- une armature (10) qui comporte un grand nombre de dents (20) et de rainures (30) formées entre les dents (20),
- au moins un enroulement (40) qui est formé par un conducteur d'enroulement (42), le conducteur d'enroulement (42) comportant deux portions de conducteur d'enroulement (44), au moins une partie de l'enroulement (40) s'étendant à l'intérieur d'une des rainures (30),
- un élément isolant (50) qui sépare électriquement l'enroulement (40) et l'armature (10),
l'élément isolant (50) comportant un moyen de guidage (52) qui est formé à l'intérieur de l'une des rainures (30), et le moyen de guidage (52) guidant une portion de conducteur d'enroulement (44) du conducteur d'enroulement (42) et la portion de conducteur d'enroulement (44) étant guidée hors de l'armature (10) par le moyen de guidage (52), **caractérisé en ce qu'**un élément de serrage (80) est prévu, l'élément de serrage (80) comportant au moins un pied de serrage (82) qui fixe la portion de conducteur d'enroulement (44) à l'intérieur du moyen de guidage (52).

2. Moteur électrique (1) selon la revendication précédente, **caractérisé en ce que** la portion de conducteur d'enroulement (44) est guidée hors de l'armature (10) dans la direction axiale.

3. Moteur électrique (1) selon la revendication précédente, **caractérisé en ce que** la portion de conducteur d'enroulement (44) est disposée à l'intérieur du moyen de guidage (52), en particulier la largeur du moyen de guidage (52) étant choisie de façon à ne guider qu'une seule portion de conducteur d'enroulement (44) à l'intérieur du moyen de guidage (52) .

4. Moteur électrique (1) selon l'une des revendications précédentes, **caractérisé en ce que** le moyen de guidage (52) sépare la portion de conducteur d'enroulement guidé (44) de l'enroulement (40).

5. Moteur électrique (1) selon l'une des revendications précédentes, **caractérisé en ce que** le moyen de guidage (52) est conçu comme une rainure de moyen de guidage (54) qui s'étend dans la direction axiale, la rainure de moyen de guidage (54) étant ouverte le long de la direction axiale.

6. Moteur électrique (1) selon l'une des revendications précédentes, **caractérisé en ce que** deux moyens de guidage (52) sont formés dans une rainure (30), les moyens de guidage (52) étant orientés l'un vers l'autre à l'intérieur d'une rainure (30).

7. Moteur électrique (1) selon l'une des revendications précédentes, **caractérisé en ce que** le moyen de guidage (52) est formé sur le fond de rainure (32) d'une rainure (30).

8. Moteur électrique (1) selon l'une des revendications précédentes, **caractérisé en ce que** l'élément isolant (50) est formé d'au moins deux segments (58, 60), les segments (58, 60) étant disposés sur l'armature (10) dans la direction axiale de l'armature (10) et dans la direction contraire à celle-ci .

9. Moteur électrique (1) selon l'une des revendications précédentes, **caractérisé en ce que** l'élément isolant (50) est formé par projection d'une matière isolante sur l'armature (10).

10. Moteur électrique (1) selon l'une des revendications précédentes, **caractérisé en ce que** l'armature (10) fait partie d'un stator et/ou d'un rotor du moteur électrique (1).

11. Moteur électrique (1) selon l'une des revendications précédentes, **caractérisé en ce qu'**un support (70) est prévu qui comporte des évidements (72), les portions de conducteur d'enroulement (44) des conducteurs d'enroulement (42) qui sont guidées vers l'extérieur ou à l'intérieur de l'armature (10) s'étendant chacune à l'intérieur d'un évidement (72) ménagé dans le support (70).

12. Moteur électrique (1) selon l'une des revendications précédentes, **caractérisé en ce que** l'au moins un pied de serrage (82) fixe la portion de conducteur d'enroulement (44) tangentiellement et/ou axialement à l'intérieur du moyen de guidage (52).

13. Moteur électrique (1) selon l'une des revendications précédentes, **caractérisé en ce que** le pied de serrage (82) est disposé entre les moyens de guidage (52) à l'intérieur d'une rainure (30).

14. Moteur électrique (1) selon l'une des revendications 1, 12 et 13, **caractérisé en ce que** l'élément de serrage (80) coopère avec le support (70), notamment l'élément de serrage (80) est relié au support (70) au moyen de l'au moins un pied de serrage (82) .

15. Moteur électrique (1) selon l'une des revendications 1, 12 à 14, **caractérisé en ce que** l'élément de serrage (80) est fixé à l'élément isolant (50) à l'aide de moyens de blocage au niveau l'au moins un pied de serrage (82).
